# EUROPEAN PATENT SPECIFICATION

(11) **EP 1 858 821 B1**
(45) Date of publication and mention of the grant of the patent: **25.02.2015**
(21) Application number: 06707554.9
(22) Date of filing: 14.03.2006
(51) Int. Cl.: C04B 18/02, C04B 111/00, C04B 28/02, C04B 111/54

(54) **LITHOIDAL GRANULAR MATERIALS**
LITHOIDE KÖRNIGE MATERIALIEN
MATERIAUX GRANULAIRES LITHOIDES

(30) Priority: 17.03.2005 IT MI20050443
(43) Date of publication of application: 28.11.2007
(73) Proprietor: IN.T.EC. S.R.L., 30172 Mestre (VE) (IT); Mapei S.p.A., I-20158 Milano (IT)
(72) Inventor: FERRARI, Giorgio, I-20158 Milano (IT); PELLAY, Roberto, I-30172 Mestre (VE) (IT)
(74) Representative: Minoja, Fabrizio
(86) International application number: PCT/EP2006/002318
(87) International publication number: WO 2006/097272

(56) References cited:
- EP-A1- 0 437 874
- EP-A2- 0 857 764
- WO-A-01/53228
- DE-A1- 3 112 179
- DE-A1- 3 420 171
- DE-A1- 4 338 690
- DE-A1- 19 632 928
- DE-C1- 4 336 613
- JP-A- 2001 261 392
- JP-A- 2002 294 232
- US-A- 4 432 666

## Description

### FIELD OF THE INVENTION

The present invention is related to the use of a lithoidal granular superplasticized aggregate obtained by the combination of an inorganic binder consisting of an hydraulic cement or a mixture of hydraulic cements; a fine material consisting of carbonaceous minerals, siliceous minerals, silico-aluminous minerals or their combinations; a superplasticizer; and water for the solidification/stabilization and the remediation of contaminater soils.

### BACKGROUND OF THE INVENTION

Natural stones have always represented an important factor in construction and architectural design. Since the Hellenistic age river stones were bound with lime and clay to create decorative floorings. In the Roman age small stones of different colours and shapes were incorporated in a mixture of lime and "pozzolana" to cast mosaic floors (*opus tassellatum* and *opus signinum*). It is during the Venetian Republic that the use of coloured stones for floorings achieved the highest aesthetic development and the "Terrazzo alia Veneziana" became famous all over the world. According to this technique, stones of selected colour and size are incorporated in the fresh binder matrix according to a predetermined design. After the hardening of the binder, smoothing and polishing operations emphasize the design and the colour effect of the stones. The traditional and most ancient technique for the casting of the "Terrazzo" employs calcium hydroxide as a binder but, more recently, portland cement and epoxy resins have also been used. In other applications, selected coloured stones can be combined with different types of binders, based on both cement and organic resins, in precast elements of various shapes which are used for the creation of decorative objects, such as linings, tiles, shelves and other bases for furniture. Furthermore, natural stones, even not bound with a binder, can represent themselves an important element for interior and exterior decorations when used to arrange gardens and flower-beds.

Considerable amount of selected stones are used all over the world for the aforementioned applications. The desired size of the stones is obtained by crushing blocks of marble of selected colour and quality and by sieving the resulting ground material in order to obtain fragments characterised by average dimensions in the range from 4 to 40 mm. The following type of marbles are the most used for the production of coloured stones in Italy: red and pink marbles, such as "Arabescato rosa", "Rosso broccato di Verona" and "Rosso Levanto"; green marbles, such as "Verde Alpi" and "Verde Piave"; yellow marbles, such as "Giallo di Siena", "Giallo Mori" and "Giallo di Verona"; grey and blue/grey marbles, such as "Bardiglio" and "Grigio Venato"; black marbles, such as "Nero d'Iseo" and "Nero Portoro"; white marbles, such as "Bianco di Carrara".

The increasing demand of valuable marbles has given significant boost to the extractive activity. However, the uncontrolled quarries exploitation has create, in many cases, environmental problems such as the deforestation of large areas, with the consequent landscape defacement and the increase of hydrogeological risks. Furthermore, the storm water washout of the quarries can dissolve trace metals from the rocks (Pb, Cd, Hg, Ni, Cu, Zn) which can be dispersed in the surrounding areas, increasing the pollution of surface waters and groundwater. Another environmental aspect is related to the crushing process of the marble blocks for the production of the small fragments useful for the decorative applications. In fact, a considerable amount of the blocks is pulverised during the crushing process and cannot be conveniently used. The resulting marble powder is a waste material and must be disposed in controlled sites with increase of the costs and further environmental problems.

Due to the aforementioned problems, the increasing limitations in the availability of good quality stones often comples technical operators to import marbles from long distances, with consequent increase in transport costs. Therefore, not always it is possible, or economically convenient, to use stones of the desired colour, with detrimental effects from an aesthetic point of view; furthermore, the use of stones of lower quality, more porous and less mechanically resistant, badly affects the durability of the final work.

Similar considerations can be made for the aggregates used in traditional cement mixtures, like in concrete. In this case, beside the aforementioned reasons related to the limited availability of good quality crushed aggregates, there is a further increasing limitation in the recruitment of fluvial aggregates, particularly suited, due to their rounded shape and the absence of sharp edges, for the production of highly flowable, easy to place, concrete mixtures. In fact, the environmental measures for the protection of the waters impose increasing limitations to the extractive activity of aggregates from rivers.

Therefore, important environmental, technical and economical reasons impose increasing limitations to the availability of natural stones both for architectural design and as aggregate for construction. In order to overcome these disadvantages, the authors of the present invention, after intense research efforts, have developed a new lithoidal granular material, based on superplasticized synthetic aggregates, which can be used in substitution to natural stones, for both decorative purposes in architectural design and as aggregates for cement mixtures. This new material, not only does not suffer from the aforementioned critical factors, but represents an important contribution to the attenuation and the reduction of such drawbacks.

The present invention suggests the use of granular material for the solidification and stabilisation of contaminated soils and sediments. It is well known that the addition of hydraulic binders to contaminated soils or sediments substantially reduces the leaching of contaminants. For instance, US 4432666 discloses a method for stabilizing contaminated soils by means of mixing oil-contaminated soil with hydraulic cement and water, solidifying and thereafter granulating said hardened mixture to obtain an aggregate. In these applications, the hydraulic binder, normally Portland cement, is added and mixed with the soil or the sediment by means of "in-situ" intensive mixers and subsequently compacted by means of track rollers. The final result is a stabilised soil which is characterised by a reduced leaching of contaminants, but with the same characteristics of specific surface and water permeability as the original soil. This aspect represents the weak point of this technology, most in the cases when the stabilised material comes in contact with water. In fact, the higher the specific surface exposed to water washing, the higher the leaching of contaminants and the degradation of the materials. These drawbacks are further worsened when the stabilised material is exposed to seawater, which contains aggressive agents, like chlorides and sulphates, which are detrimental to the durability of cement mixtures.

In order to overcome these disadvantages, the authors of the present invention, after intensive efforts, have developed the use of granular, superplasticized synthetic aggregate based on inorganic binders, characterised by high mechanical strength, low porosity, low water permeability and high durability, for the improvement of the leaching of contaminants by this new process.

The detailed features of the invention are hereinafter described.

### DETAILED DESCRIPTION OF THE INVENTION

The present invention is related to the use of lithoidal granular superplasticized aggregate obtained by the combination of the following essential components:
a) 5 to 50 per cent by weight, preferably 10 to 35 per centby weight, of an inorganic binder consisting of an hydraulic cement or a mixture of hydraulic cements;
b) 40 to 90 per cent by weight, preferably 60 to 80 per cent by weight, of a fine material of granulometry lower than 4 mm, essentially consisting of carbonaceous minerals, siliceous minerals, silico-aluminous minerals or their combinations;
c) 0.01 to 10 per cent by weight, preferably 0.05 to 5 per cent by weight, of a superplasticizer;
d) 1 to 20 per cent by weight, preferably 3 to 15 per cent by weight, of water;
e) 0 to 10 per cent by weight of inorganic and/or organic pigments;
f) 0 to 20 per cent by weight of amorphous silica-fume or other synthetic or natural pozzolanic material;
g) 0 to 10 per cent by weight of hemihydrate calcium sulphate or lime;
h) 0 to 40 per cent by weight of metallic material with granulometry lower than 2 mm;
i) 0 to 40 per cent by weight of coloured glass of granulometry lower than 2 mm;
j) 0 to 40 per cent by weight of plastic materials of granulometry lower than 2 mm;
k) 0 to 10 per cent by weight of other additives, such as setting and hardening accelerators, retarders, dispersants, viscosifying agents, wetting agents, surfactants, impregnating agents, air entraining agents, hydrophobic agents, water repelling agents, chelating agents, precipitating agents, UV filters, waxes, essences and perfumes, fertilizers, herbicides and pesticides, produced by a process including the following steps:
   - mixing of the essential and optional additional components;
   - nucleation and growing of the granular material;
   - optional surface treatments of the grains;
   - curing and hardening of the grains;
   - optional post-treatments
   for the solidification/stabilisation and the remediation of contaminated soils.

The hydraulic binders for use in the present invention preferably consists of Portland cement and alumina cement. Other binders can be conveniently used, such as slag cement. The different binders can be used alone or in combinations thereof. Of particular interest are the combinations of Portland cement and alumina cement, optionally stabilised with the addition of hemihydrate calcium sulphate. These mixtures allow to obtain the rapid hardening of the granular material for use in the present invention, even though it is cured at ambient temperature.

The materials of granulometry less than 4 mm, essentially consisting of carbonaceous, siliceous, silico-alluminous minerals or their mixtures, include silica, carbonaceous sands and their mixtures, the fine materials and powders resulting from the crushing and the processing of marble or bricks, debris from construction, from the quarrying and washing of aggregates and gravels, the contaminated soils and sediments and the clays. Such materials can be used alone or combinations thereof, according to the necessity.

Non-limiting examples of the superplasticizers useful for the invention are synthetic polymers based on naphthalene sulfonate condensated with formaldehyde, melamine sulfonate condensated with formaldehyde, lignosulfonate, polycarboxylate superplasticizers based on copolymers of (meth) acrylic acid with oxyalkylene derived monomers, like methoxypolyoxyethyleneglycols (meth)acrylates or vinyl polyoxyethyleneglycols, optionally combined with other monomers such as styrene, sulfonated monomers, vinyl monomers, maleic anhydride derivatives or other (meth)acrylates. The different polymers can be used alone or in combinations thereof, both in the form of aqueous solution or in powder form.

Water can be added separately from the other components or can be already present in one or more of the ingredients of the invention, such as in the carbonaceous, siliceous and silico-aluminous minerals, soils and contaminated sediments, which can be characterised by different contents in water. Furthermore, water can be introduced together with the superplasticizers, when they are used in solution.

Pigments and other colouring substances can be addedto impart specific colour to the synthetic superplasticized aggregates of the invention. As an example, pigments based on iron, manganese, zinc, and chromium oxides can be used, in order to obtain black, brown, red, yellow and green colours. Different colours and effects can be obtained with organic pigments, including fluorescent dyes. Both organic and inorganic pigments and dyes can be used in powder, paste, solution or dispersion form.

The characteristics of the granular materials for use in the invention can be improved by addition of substances with high content in amorphous silica, such as silica-fume and other natural or synthetic pozzolanic materials. The addition of these materials promotes the reaction of calcium hydroxide, which is characterised by a relatively high solubility in water, in calcium silicate hydrates, which are almost insoluble. This reaction substantially improves the durability of the material, reducing the appearance of the efflorescences caused by calcium hydroxide.

Metallic powders can be added to impart particular aesthetic characteristics, not obtainable with the natural stones. Furthermore, the presence of metallic powder can improve mechanical characteristics such as resistance to abrasion.

When granular materials characterised by low density are required, small fragments of plastic materials can be added. Such plastic materials can be also in the form of polymers in dispersion or in emulsion.

The aesthetic effect of the granular materials of the invention can be further improved by addition of small fragments of coloured glass , which improve the brightness of the polished surfaces.

In addition to the afore mentioned secondary components, many other substances can be used to give specific properties e.g. to improve aesthetic and/or mechanical characteristics. Essences or perfumes can be added to give further properties when the granular materials of the invention are used as decorative elements for interiors. Furthermore, the addition of fertilizers to the main ingredients can represent an useful complementary element when the granular materials are used to decorate potters and flower-beds. By this way, besides the decorative effect due to the coloured granular material, the controlled release of the fertilizer ensures a prolonged and controlled dosage of nutrients to the soil. In other applications, the addition of herbicides and/or pesticides to the main ingredients can ensure the controlled release of substances able to preserve the plants from pests and dangerous insects.

The process for the production of the granular materials for use in the invention includes the following steps:
1. mixing of the main and eventual accessory ingredients;
2. nucleation and growing of the grains;
3. surface treatments of the grains;
4. curing and hardening of the grains;
5. optional post-treatments.

1. Mixing of the main and optional accessory ingredients - This step can be can be accomplished with various types of mixing systems. In general, in the first step the solid ingredients are mixed to obtain an homogeneous mixture. In a second step, water and optional additional liquid components are added, avoiding the formation of wet agglomerates of big dimensions. This is possible by intensive mixing and/or by spraying water and the other liquid ingredients during the addition. After the addition of water and the other liquid ingredients, the material, which is in the form of a wet finely divided powder, can be left for some minutes in the mixing system. Then, the superplasticizer is added under mixing, optionally mixed and sprayed with a part of the mixing water. In this step also is essential to avoid the formation of wet macro-agglomerates.
2. Nucleation and growing of the grains - This step is carried out in a rotating mixer where the mixture of the main and secondary ingredients, thanks to the rotary motion, begins to nucleate and granular materials of increasing dimensions are produced. Besides the growing effect, the rolling of the grains in the mixer imparts to the granular material of the present invention a spherical shape. The cup of the rotating mixer can be of different shape and dimension. Particularly suitable are the mixers with the shape of rotating plate, with variable inclination and speed of rotation.
3. Optional surface treatments of the grains - During the growing step 2) additional ingredients can be added to impart specific characteristics. One of the most common treatments consists in the addition of a supplementary amount of binder in order to dry the surface of the grains and to prevent their sticking when they are still in the fresh state. Other treatments consists in the addition of water repelling agents, water proofing agents, impregnating agents and other additives to impart to the granular materials of the present invention specific superficial characteristics.
4. Curing and hardening of the grains — This tsep is carried out by normal or thermal curing. During the first period of hydration, before the setting of the binder, it is advisable to move periodically the granular materials with some mechanical device in order to keep the grains separated and to prevent their coalescence.
5. Optional post-treatments - The characteristics of the granular materials can be further improved by performing additional treatments during or after the hardening process. In particular, specific treatments to improve the mechanical characteristics or the dimensional stability of the grains can be accomplished, such as the thermal treatments described in the US 5,522,962, or the treatments with supercritical CO₂ or other substances as those described in WO 97/44294.

The granular materials for use in the invention are composed by rounded grains with a statistically distributed particle size. The most probable particle size is in the range between 2 mm and 20 mm. Particle sizes external to this interval are less frequent and, in general, they are not required. In particular, the fraction with dimensions lower than 1 mm is negligible.

In the following example, the use of the invention is described

### EXAMPLE

2000 g of soil contaminated by heavy metals from an abandoned industrial area, largely consisting of siliceous and carbonaceous minerals with the presence of feldspathic and clayey fractions (water content in about 10 per cent and maximum particle size of 2 mm) are mixed with 667 g o cement CEM I 52.5R. Then, 100 g of water are slowly added under stirring, followed by the sprayed addition of 45 g of polycarboxylate superplasticizer (Dynamon SP1 in the form of 30 per cent solution) previously diluted with 79 g of water. The resulting mixture is progressively transferred in a mixer with a 400 mm diameter cup rotating plate at a speed of 150 rpm. The resulting granular material is treated in the same rotating mixer with a mixture of 148 g of white cement CEM I 52.5R. The resulting material consists of 3039 g of a granular material, of spherical shape and clean surface, which is cured for 28 days in controlled conditions of temperature (20°C) and humidity (r.h. > 95%). During the first 12 hours of curing, the granular material is periodically mixed to avoid the agglomeration of the grains. After 28 days of curing, the fraction passing the sieve of mesh 4 mm has, been used for the measurement of the leaching of heavy metals according the Italian leaching test of the Environment Ministry Decree 5 February 1998 for reusable wastes. According to this test, a weighted amount of the sample is placed in a fivefold volume of deionised water, which is renewed at fixed times (after 2, 8, 24, 48, 72, 102, 168, 384 hours). On each fraction of the eluates, the concentration of contaminants is measured and the sum of these concentrations (ΣCi) is compared with the fixed limit (CL). The test is passed if ΣCi < CL for each contaminant.

The results of the leaching test are reported in the following Table 4:

**Table 4**

| **Contaminant** | **Time of leaching (hours)** | | | | | | | | **ΣCi** | **CL** |
|---|---|---|---|---|---|---|---|---|---|---|
| | **2** | **8** | **24** | **48** | **72** | **102** | **168** | **384** | | |
| **As (ppb)** | <1 | <1 | <1 | <1 | <1 | <1 | <1 | <1 | <8 | 50 |
| **Cd (ppb)** | <0.2 | <0.2 | <0.2 | <0.2 | <0.2 | <0.2 | <0.2 | <0.2 | <1.6 | 5 |
| **Cr (ppb)** | <1 | <1 | <1 | <1 | <1 | <1 | <1 | <1 | <8 | 50 |
| **Cu (ppb)** | 1.2 | 1.2 | 1.9 | 2.4 | 1.9 | 2.0 | 3.7 | 4.4 | 18.7 | 50 |
| **Hg (ppb)** | <0.1 | <0.1 | <0.1 | <0.1 | <0.1 | <0.1 | <0.1 | <0.1 | <0.8 | 1 |
| **Pb (ppb)** | 2.5 | 3.1 | 4.4 | 4.3 | 3.3 | 3.1 | 4.5 | 6.8 | 32.0 | 50 |

From this Table 4, it is possible to observe that the cumulative results (ΣCi), expressed in ppb (parts per billions) of the different contaminants are by far lower than the cumulative limits (CL) stated by the Environment Ministry Decree 5 February 1998.

As a comparison, in the following Table 5 are reported the results of the test conducted on the contaminated soil without the treatment of the present invention.

**Table 5**

| **Contaminant** | **Time of leaching (hours)** | | | | | | | | **ΣCi** | **CL** |
|---|---|---|---|---|---|---|---|---|---|---|
| | **2** | **8** | **24** | **48** | **72** | **102** | **168** | **384** | | |
| **As (ppb)** | 108 | 85 | 97 | 159 | 135 | 156 | 180 | 334 | 1254 | 50 |
| **Cd (ppb)** | <0.2 | 0.3 | <0.2 | 0.5 | 0.4 | 0.5 | 0.7 | 1.1 | 3.9 | 5 |
| **Cr (ppb)** | 4.3 | 4.6 | 6.5 | 8.6 | 7.1 | 5.9 | 9.2 | 17.8 | 64.0 | 50 |
| **Cu (ppb)** | 24.3 | 14.4 | 11.0 | 20.7 | 19.6 | 16.0 | 23.9 | 45.1 | 175 | 50 |
| **Hg (ppb)** | <0.1 | <0.1 | <0.1 | <0.1 | <0.1 | <0.1 | <0.1 | <0.1 | <0.8 | 1 |
| **Pb (ppb)** | 3.0 | 17.6 | 10.6 | 27.0 | 20.0 | 24.1 | 35.2 | 80.2 | 217.7 | 50 |

By comparing the results of the leaching tests of the previous tables, it is quite evident that, most for arsenic, lead, chromium, copper and cadmium, the leaching values of the materials treated according the method of the present invention are quite low, in many cases they are lower than the detection limits of the analytical method and, in any case, they are much more lower than the leaching values of the untreated soil. These results confirm the excellent performances of the granular materials for use in the present invention, which are characterised by low porosity and high mechanical characteristics, for the solidification/stabilisation of contaminated soils.

## Claims

1. Use of lithoidal granular materials obtained from the combination of the following essential ingredients:
- 5 to 50 per cent by weight of a binding system composed by an hydraulic cement or a mixture of hydraulic cements;
- 40 to 90 per cent by weight of a contaminated soil with maximum particle size of 4 mm diameter, essentially consisting of carbonaceous minerals, siliceous minerals, siliceous-aluminous minerals or their mixtures;
- 0.01 to 10 per cent by weight of a superplasticizer;
- 1 to 20 per cent by weight of water.
in optional combination with the following additional ingredients:
- 0 to 10 per cent by weight of pigments or inorganic or organic colouring substances;
- 0 to 20 per cent by weight of silica-fume or other pozzolanic material, both natural and synthetic;
- 0 to 10 per cent by weight of calcium sulphate hemihydrate or lime in powder form;
- 0 to 40 per cent by weight of fine metallic powder of particle size lower than 2 mm diameter;
- 0 to 40 per cent by weight of fine coloured glass of particle size lower than 2 mm diameter;
- 0 to 40 per cent by weight of plastic materials with particle size lower than 2 mm diameter;
- 0 to 10 per cent by weight of other additives, selected from setting and hardening accelerating additives, setting and hardening retarding additives, viscosifiers, wetting agents, surfactants, impregnating agents, air-entraining agents, hydrophobic agents, water repellents, UV filters, waxes, essences and perfumes, fertilizers and nutrients, herbicides, pesticides
and produced by a process including the following steps:
- mixing of the essential and optional additional components;
- nucleation and growing of the granular material;
- optional surface treatments of the grains;
- curing and hardening of the grains;
- optional post- treatments
for the solidification/stabilisation and the remediation of contaminated soils.

## Patentansprüche

1. Verwendung von lithoidalen granulären Materialien, die aus der Kombination der nachstehenden essenziellen Bestandteile:
- 5 bis 50 Gewichtsprozent eines Bindemittelsystems, dass aus einem Wasserzement oder einem Gemisch von Wasserzementen zusammengesetzt ist;
- 40 bis 90 Gewichtsprozent eines kontaminierten Bodens mit einer maximalen Partikelgröße von 4 mm im Durchmesser, im Wesentlichen bestehend aus kohlenstoffhaltigen Mineralien, siliziumhaltigen Mineralien, siliziumaluminiumhaltigen Mineralien oder deren Gemischen;
- 0,01 bis 10 Gewichtsprozent eines Fließmittels;
- 1 bis 20 Gewichtsprozent Wasser
in optionaler Kombination mit den nachstehenden zusätzlichen Bestandteilen:
- 0 bis 10 Gewichtsprozent an Pigmenten oder anorganischen oder organischen Farbkörpern;
- 0 bis 20 Gewichtsprozent Silikastaub oder eines anderen pozzuolanartigen Materials, sowohl natürlich als auch synthetisch;
- 0 bis 10 Gewichtsprozent Calciumsulfat-Hemihydrat oder Kalk in Pulverform;
- 0 bis 40 Gewichtsprozent eines feinen metallischen Pulvers einer Partikelgröße von weniger als 2 mm im Durchmesser;
- 0 bis 40 Gewichtsprozent eines feinen Buntglases einer Partikelgröße von weniger als 2 mm im Durchmesser;
- 0 bis 40 Gewichtsprozent an Plastikmaterialien mit einer Partikelgröße von weniger als 2 mm im Durchmesser;
- 0 bis 10 Gewichtsprozent anderer Additive, ausgewählt aus Additiven zur Abbinde- und Härtungsbeschleunigung, Additiven zur Abbinde- und Härtungsverlangsamung, Viskositätsmodifizierungsmitteln, Netzmitteln, Tensiden, Imprägniermitteln, Luftschleppmitteln, hydrophoben Mitteln, wasserabweisenden Mitteln, UV-Filtern, Wachsen, Essenzen und Parfümen, Düngemitteln und Nährstoffen, Herbiziden, Pestiziden,
erhalten werden und durch ein Verfahren, das die nachstehenden Schritte beinhaltet:
- Mischen der essenziellen und optionalen zusätzlichen Komponenten;
- Kernbildung und Wachsen des granulären Materials;
- optionale Oberflächenbehandlungen der Körner;
- Aushärten und Härten der Körner;
- optionale Nachbehandlungen,
hergestellt werden, für die Verfestigung/Stabilisierung und die Sanierung von kontaminierten Böden.

## Revendications

1. Utilisation de matériaux granulaires lithoïdes obtenus par la combinaison des ingrédients essentiels suivants :
- 5 à 50 pour cent en poids d'un système liant constitué par un ciment hydraulique ou un mélange de ciments hydrauliques ;
- 40 à 90 pour cent en poids d'un sol contaminé avec une taille de particules maximale de 4 mm de diamètre, essentiellement constituée de minéraux carbonés, de minéraux siliceux, de minéraux silico-alumineux ou de leurs mélanges ;
- 0,01 à 10 pour cent en poids d'un superplastifiant ;
- 1 à 20 pour cent en poids d'eau.
en combinaison éventuelle avec les ingrédients additionnels suivants :
- 0 à 10 pour cent en poids de pigments ou de substances colorantes inorganiques ou organiques ;
- 0 à 20 pour cent en poids de fumées de silice ou d'un autre matériau pouzzolanique, à la fois naturel et synthétique ;
- 0 à 10 pour cent en poids de sulfate de calcium hémihydraté ou de chaux sous forme de poudre ;
- 0 à 40 pour cent en poids de poudre métallique fine d'une taille de particule inférieure à 2 mm de diamètre ;
- 0 à 40 pour cent en poids de verre coloré fin d'une taille de particules inférieure à 2 mm de diamètre ;
- 0 à 40 pour cent en poids de matières plastiques avec une taille de particules inférieure à 2 mm de diamètre ;
- 0 à 10 pour cent en poids d'autres additifs, choisis parmi les accélérateurs de prise et de durcissement, les retardateurs de prise et de durcissement, les améliorants de viscosité, les agents mouillants, les tensioactifs, les agents d'imprégnation, les entraîneurs d'air, les agents hydrophobes, les agents hydrofuges, les filtres UV, les cires, les essences et les parfums, les engrais et les nutriments, les herbicides, les pesticides
et produits par un procédé comprenant les étapes suivantes :
- mélange des composants essentiels et supplémentaires facultatifs ;
- nucléation et croissance du matériau granulaire ;
- traitements de surface facultatifs des grains ;
- prise et durcissement des grains ;
- post-traitements facultatifs
pour la solidification/stabilisation et l'assainissement des sols contaminés.
